# EUROPEAN PATENT APPLICATION

(11) **EP 4 418 181 A1**
(43) Date of publication of application: **21.08.2024**
(21) Application number: 22946065.4
(22) Date of filing: 30.12.2022
(51) Int. Cl.: G06Q 10/083, G08G 1/01, G08G 1/04, G08G 1/042, G08G 1/052, G06V 20/54

(54) **LOCAL SERVER AND METHOD FOR CONTROLLING ROAD TRAFFIC**

(71) Applicant: BITSENSING INC., Seoul 04778 (KR)
(72) Inventor: NOH, Tan Ho, Seongnam-si, Gyeonggi-do 13105 (KR)
(74) Representative: BCKIP Part mbB
(86) International application number: PCT/KR2022/021713
(87) International publication number: WO 2024/143641

(57) **Abstract**

A local server for controlling road traffic comprising a collecting unit configured to collect detection information for a detection area of at least one fusion sensor installed in a target road from the fusion sensor and a traffic information generating unit configured to generate traffic information about the target road based on the collected detection information, wherein an event set area for detecting at least one lane in the target road is set within the detection area.

## Description

### TECHNICAL FIELD

The present disclosure relates to a local server and method for controlling road traffic.

### BACKGROUND

In recent years, an intelligent transport system (ITS) has been introduced into conventional road traffic control systems. The ITS enables components of conventional transport systems to organically interact with each other by applying sensor technologies for collecting road traffic information to the components of the conventional transport systems in order to reduce traffic congestion and expand stable traffic services.

With the development and commercialization of autonomous vehicles, the importance of a cooperative intelligent transport system (C-ITS) has been increasingly emphasized. The C-ITS is capable of directly providing regional and urban traffic information by using V2I communication that enables communication with vehicles on the road.

Meanwhile, a road traffic control system installs road traffic information collection sensors commercialized by the sensor technologies for collecting road traffic information about a road and analyzes sensor information through a center server connected to the road traffic information collection sensors. Herein, the road traffic information collection sensors may include, for example, a camera, a RADAR, a LiDAR, etc.

A conventional camera sensor-based road traffic control system is vulnerable to weather environments (for example, rain, snow, fog) and greatly affected by time zones (particularly, night time zone) and imaging environments (for example, shadows, lighting). A camera sensor has a relatively short detection distance to a traffic object and is inaccurate in recognizing spatial situations of the traffic object (for example, location, range and speed of the traffic object) in a shadow section.

A conventional RADAR sensor-based road traffic control system determines traffic situations based on sorting information about a traffic object detected by the RADAR sensor and length information of the traffic object and thus produces an inaccurate result. It is difficult for the RADAR sensor to detect a vehicle when the vehicle stops for a stop signal or an unexpected reason.

As for a conventional LiDAR sensor-based road traffic control system, it is difficult to detect a traffic object since the LiDAR sensor is vulnerable to weather environments (particularly, fog) and has a relatively short detection distance to the traffic object. The LiDAR sensor is too expensive to be used as an infra sensor and is limited in application due to a frequent maintenance cycle.

Meanwhile, as for a conventional road traffic control system, center servers are provided for respective regions or cities to aggregate and control detection information from road traffic information collection sensors widely deployed over the regions or cities.

In the conventional road traffic control system, the respective regions or cities have different operators in charge of road traffic control. Therefore, it is difficult to integrate systems due to the presence or absence of a local DB and physical constraints such as the amount of data communication.

### DISCLOSURE OF THE INVENTION

### PROBLEMS TO BE SOLVED BY THE INVENTION

The present disclosure is to solve the above problems and to generate traffic information about a target road based on detection information for a detection area of a fusion sensor, and the detection information is collected from at least one fusion sensor installed in the target road.

However, the problems to be solved by the present disclosure are not limited to the above-described problems. There may be other problems to be solved by the present disclosure.

### means for solving the problems.

As a technical means for solving the above-described technical problem, a local server for controlling road traffic according to a first aspect of the present disclosure includes: a collecting unit configured to collect detection information for a detection area of at least one fusion sensor installed in a target road from the fusion sensor; and a traffic information generating unit configured to generate traffic information about the target road based on the collected detection information, and an event set area for detecting at least one lane in the target road is set within the detection area.

A method for controlling road traffic by a local server according to a second aspect of the present disclosure includes: collecting detection information for a detection area of at least one fusion sensor installed in a target road from the fusion sensor; and generating traffic information about the target road based on the collected detection information, and an event set area for detecting at least one lane in the target road is set within the detection area.

The above-described technical solutions are provided by way of illustration only and should not be construed as liming the present disclosure. Besides the above-described embodiments, there may be additional embodiments described in the accompanying drawings and the detailed description.

### Effects of the invention

According to any one of the above-described means for solving the problems of the present disclosure, it is possible to generate traffic information about a target road based on detection information for a detection area of a fusion sensor, and the detection information is collected from at least one fusion sensor installed in the target road.

Accordingly, it is possible to overcome the limitations of a conventional road traffic control system and provide an advanced road traffic control service.

### BRIEF DESCRIPTION OF THE DRAWINGS

**FIG. 1** shows the configuration of a road traffic control system according to an embodiment of the present disclosure.
**FIG. 2** is a block diagram of the first local server illustrated in **FIG. 1**, according to an embodiment of the present disclosure.
**FIG. 3A** to **FIG. 3E** are provided to explain a method for generating traffic information about a target road by using a fusion sensor according to an embodiment of the present disclosure.
**FIG. 4** is a flowchart showing a method for controlling road traffic according to an embodiment of the present disclosure.

### BEST MODE FOR CARRYING OUT THE INVENTION

Hereinafter, embodiments of the present disclosure will be described in detail with reference to the accompanying drawings to be readily implemented by a person with ordinary skill in the art to which the present invention belongs. However, it is to be noted that the present disclosure is not limited to the example embodiments but can be embodied in various other ways. In the drawings, parts irrelevant to the description are omitted in order to clearly explain the present disclosure, and like reference numerals denote like parts through the whole document.

Through the whole document, the term "connected to" or "coupled to" that is used to designate a connection or coupling of one element to another element includes both a case that an element is "directly connected or coupled to" another element and a case that an element is "electronically connected or coupled to" another element via still another element. Further, it is to be understood that the term "comprises or includes" and/or "comprising or including" used in the document means that one or more other components, steps, operation and/or existence or addition of elements are not excluded in addition to the described components, steps, operation and/or elements unless context dictates otherwise and is not intended to preclude the possibility that one or more other features, numbers, steps, operations, components, parts, or combinations thereof may exist or may be added.

Throughout the whole document, the term "unit" includes a unit implemented by hardware or software and a unit implemented by both of them. One unit may be implemented by two or more pieces of hardware, and two or more units may be implemented by one piece of hardedware.

In the present specification, some of operations or functions described as being performed by a device may be performed by a server connected to the device. Likewise, some of operations or functions described as being performed by a server may be performed by a device connected to the server.

Hereinafter, the present disclosure will be explained in detail with reference to the accompanying configuration views or process flowcharts.

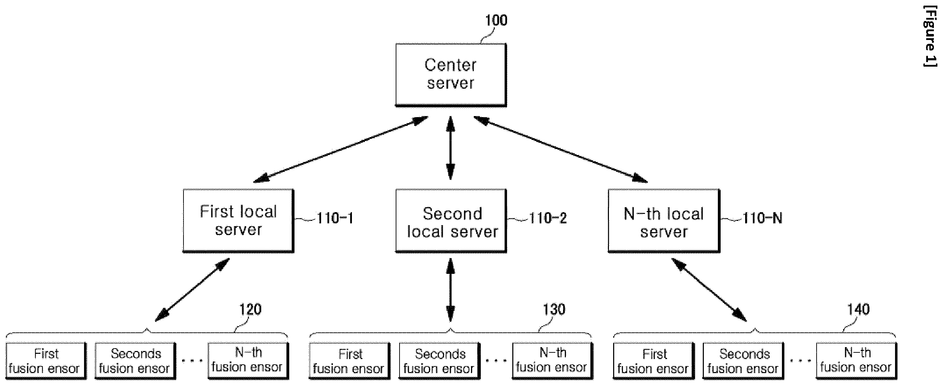

**FIG. 1** shows the configuration of a road traffic control system according to an embodiment of the present disclosure.

Referring to **FIG. 1****,** the road traffic control system may include a center server 100, a plurality of local servers 110-1, 110-2 and 110-N, and a plurality of fusion sensors 120, 130 and 140. However, the road traffic control system illustrated in **FIG. 1** is just an embodiment of the present disclosure and should not be construed as liming the present disclosure and can be configured differently from that shown in **FIG.** according to various embodiments of the present disclosure.

The plurality of fusion sensors 120, 130 and 140 may be traffic volume detecting and measuring sensors, and each of the fusion sensors 120, 130 and 140 may include a camera sensor, a radar sensor, a GPU, and a GPS sensor.

In the plurality of fusion sensors 120, 130 and 140, a detection area to be detected by the fusion sensors, a detection target lane in the detection area, and a separate event set area in the detection area is set.

Each of the fusion sensors 120, 130 and 140 is supplemented with a camera sensor and a GPU sensor in order to improve the problem of a conventional radar that cannot accurately identify types of traffic objects in the detection area. That is, each of the fusion sensors 120, 130 and 140 may use the camera sensor and the GPU sensor to identify types of traffic objects (*e.g.*, car, truck, bus, motorcycle, bicycle, etc.) in the detection area.

The radar sensor included in each of the fusion sensors 120, 130 and 140 may continuously detect a basic traffic volume even when the camera sensor is degraded. The radar sensor may detect location information and a movement speed of a traffic object moving in the detection area, and generate accumulated movement trajectories of the traffic object in the detection area by continuously tracking and detecting past locations and the current location of the traffic object.

Each of the fusion sensors 120, 130 and 140 may use GPS information of the fusion sensor to generate collection time for the detected traffic object and location information about the detection area where the detected traffic object is located.

Each of the fusion sensors 120, 130 and 140 is supplemented with the camera sensor to solve the problem of the conventional radar (*i.e*., incapable of detecting a stationary object), and can accurately detect a stationary traffic object even when the traffic object stops due to traffic situations (*e.g*., signal waiting, accident, etc.).

Each of the fusion sensors 120, 130 and 140 may provide each local server managing each of the fusion sensors 120, 130 and 140 with information acquired by the camera sensor and the radar sensor as independent sensors in addition to fused traffic situation detection information.

The plurality of local servers 110-1, 110-2 and 110-N may collect and aggregate detection information from a number of fusion sensors managed by each of the local servers 110-1, 110-2 and 110-N. For example, a first local server 110-1 may collect detection information for a detection area of the plurality of fusion sensors 120 installed in a first target road and managed by the first local server 110-1.

The plurality of local servers 110-1, 110-2 and 110-N may process basic information, such as a detection area set for each fusion sensor of each local server, lane information, identification information of a traffic object, etc., and generate additional traffic information corresponding to the entire detection area in real time.

For example, suppose that the first local server 110-1 manages a first fusion sensor for detecting a first detection area and a second fusion sensor for detecting a second detection area, and the first detection area and the second detection area are connected to each other. In this case, if a specific vehicle passes through a specific lane 1-1 in the first detection area and then uses a specific lane 2-1 in the second detection area connected to the first detection area, the first local server 110-1 may collect detection information for each detection area from each of the first fusion sensor and the second fusion sensor and generate additional traffic information about a local lane, which is a separate set lane connected to both the specific lane 1-1 and the specific lane 2-1.

The plurality of local servers 110-1, 110-2 and 110-N may collect detection information for a detection area of at least one fusion sensor installed in a target road managed by each of the local servers 110-1, 110-2 and 110-N and generate traffic information about the corresponding target road based on the collected detection information.

For example, the first local server 110-1 may generate real-time traffic information about traffic situations of a detection range, such as the total number of traffic objects driving in detection areas of the plurality of fusion sensors 120 installed in the target road managed by the first local server 110-1, the current driving speed of each traffic object, an average driving speed in each lane, the number of lane changes, information about the detection areas, etc. based on detection information for the detection areas.

Each of the plurality of local servers 110-1, 110-2 and 110-N may perform real-time transmission with the plurality of fusion sensors 120, 130 and 140 corresponding thereto, and may supply power to the plurality of fusion sensors corresponding thereto.

Each of the plurality of local servers 110-1, 110-2 and 110-N may further generate traffic statistics information for a section corresponding to a range which cannot be actually detected due to limitations in performance of a unit sensor.

Each of the plurality of local servers 110-1, 110-2 and 110-N may store, in each local database, the detection information for the detection areas collected from the plurality of fusion sensors 120, 130 and 140 corresponding thereto.

Therefore, according to the present disclosure, it is possible to solve the problems of the conventional traffic control technology (*i.e*., concentration of data and excessive communication traffic in the traffic control center, management and maintenance of the facilities or decrease in speed of the operating system caused by data storage capacity, etc.) by using local databases of the local servers 110-1, 110-2 and 110-N and distributing a data collection and storage function of the center server 100.

The center server 100 may be mainly provided in a server room inside the road traffic control center.

The center server 100 may be connected to the plurality of local servers 110-1, 110-2 and 110-N by various communication methods and may receive traffic information about managed target roads from the plurality of local servers 110-1, 110-2 and 110-N.

The center server 100 may perform an interworking operation between a plurality of local controllers by linking traffic situations of regions or cities beyond the detection ranges of the respective local servers 110-1, 110-2 and 110-N.

The center server 100 may process manipulation or control command information from a controller in charge of road traffic control and display current traffic volume information of each city/region on a control screen by scaling up or scaling down the information on a whole map.

The center server 100 may use the traffic information about the managed target roads received from the plurality of local servers 110-1, 110-2 and 110-N to produce inter-city/ inter-region linked operation information.

Therefore, according to the present disclosure, it is possible to overcome the limitations of the conventional control system (*i.e*., separately managing a traffic volume classified into an interrupted flow, an uninterrupted flow and a combined flow according to the types of roads such as downtown/ nonurban area/ national highway/ expressway, etc.) and provide real-time national traffic volume information regardless of the types of roads.

Also, according to the present disclosure, it is possible to implement a national road traffic control system using a national infrastructure network as well as a local on-site control system and a city/region control system.

Further, according to the present disclosure, it is possible to perform distribution/compression of road traffic situation information and regulate a unit amount of data communication to be constant even when the amount of detection information collected from each site increases.

Hereinafter, an operation of each component of the road traffic control system shown in **FIG.** 1 will be described in more detail.

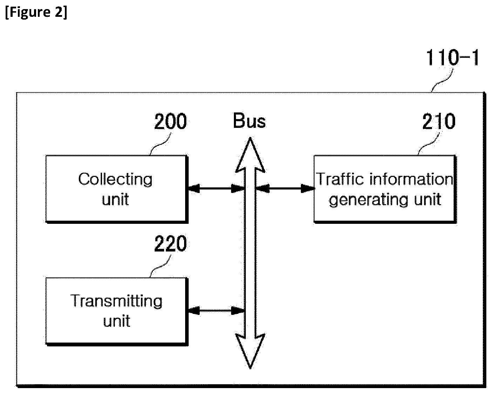

**FIG. 2** is a block diagram of the first local server 110-1 illustrated in **FIG. 1****,** according to an embodiment of the present disclosure.

Referring to **FIG. 2****,** the first local server 110-1 may include a collecting unit 200, a traffic information generating unit 210, and a transmitting unit 220. However, the first local server 110-1 illustrated in **FIG. 2** is merely an embodiment of the present disclosure, and various modifications based on the components illustrated in **FIG. 2** are possible.

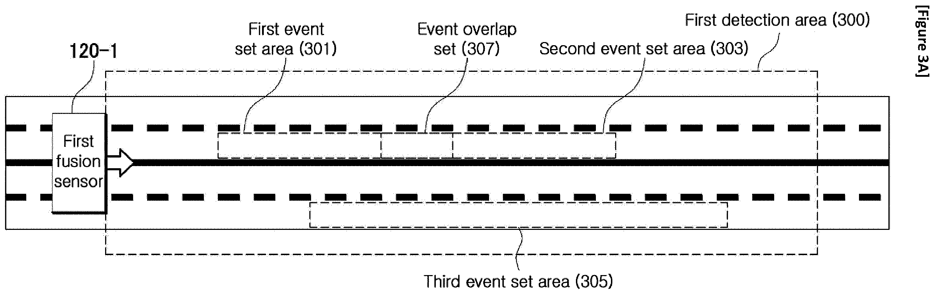

Hereinafter, **FIG. 2** will be described with reference to **FIG. 3A** to **FIG. 3E****.**

The collecting unit 200 may collect detection information for a detection area of at least one fusion sensor installed in a target road. Hereinafter, the fusion sensor may include a camera sensor and a radar sensor. Herein, the detection information may include at least one of location information and type information of a traffic object located in the detection area, the total number of traffic objects driving in the detection area, a driving speed of each traffic object, the average driving speed in each lane of the detection area, and the number of lane changes.

For example, referring to **FIG. 3A****,** a first fusion sensor 120-1 managed by the first local server 110-1 may sense a traffic object present in a first detection area 300 detected by the first fusion sensor 120-1 and generate detection information about the sensed traffic object. Herein, the detection information about the traffic object may include location information about the traffic object in the first detection area including lane information about a lane where the traffic object is located, movement speed information including a speed of the traffic object in a stationary state (*i.e*., at a speed of 0), and type information of the traffic object (*e.g*., pedestrian, car, bus, truck (large), truck (small), van (SUV), motorcycle, bicycle, etc.).

In the first detection area of the first fusion sensor 120-1, event set areas 301, 303 and 305 for detecting at least one lane in the target road are set.

The event set areas 301, 303 and 305 are areas for detecting an occurrence of a predetermined event in the lane, and the predetermined event may include at least one of a speed violation event, a lane change event, a dedicated lane violation event, a driving event of a specific traffic object, a jaywalking event, and a backward driving event.

The first fusion sensor 120-1 may detect a traffic volume in each lane, the average movement speed in each lane, and type information of the traffic object and generate detection information. Also, the first fusion sensor 120-1 may detect a traffic volume, the average movement speed and type information of traffic objects moving in the event set areas 301, 303 and 305 and generate detection information.

The first fusion sensor 120-1 may generate detection information including event information, such as entry and exit times and the average movement speed of traffic objects passing through the event set areas 301, 303 and 305, occupation lengths (queue) of traffic objects in a stationary state in the event set areas 301, 303 and 305, a driving direction of traffic objects, lane changes, etc.

For example, if the operator sets the first fusion sensor 120-1 to detect a speed violation in the first event set area 301, the first fusion sensor 120-1 may further generate event information about a specific traffic object driving at a predetermined speed or more in the first event set area 301.

Accordingly, the operator of the traffic control system may check when, where, how much and which type of traffic object exceeds a speed limit based on the event information.

Briefly, the difference between the prior art and the present disclosure in terms of a queue detection function will be described. For example, an excessive queue is detected in a left turn lane and a preset signaling operation program is excepted when the excessive queue occurs to provide an over-ride signal, a radar sensor of a conventional radar-based control system is limited in performance of tracking a stationary vehicle and cannot accurately identify a spatial location of a traffic object in a camera and image analysis.

However, the fusion sensor of the present disclosure can accurately detect a stationary traffic object by identifying spatial location information about a traffic object tracked by the radar sensor and further identifying the presence or absence of the traffic object on an actual road based on camera image information when the traffic object stops and cannot be detected by the radar. Also, the fusion sensor of the present disclosure may use location information about a point where the traffic object tracked by the radar sensor disappears in that situation and thus may derive spatial location information which cannot be detected when the foremost traffic object in a queue is a bus or truck or an image has an error depending on lighting and time zone.

In this case, when the queue detection function is performed to detect that the length of the queue is longer than that of the event set area, the present disclosure can provide an optimal signaling system to generate an over-ride signal by changing the conventional signaling operation program (A go signal is not given to a lane where an excessive queue occurs).

Referring back to **FIG. 3A****,** the first event set area 301 and the second event set area 303 may be set to overlap each other, and the first fusion sensor 120-1 may detect separate events in the first event set area 301 and the second event set area 303, respectively.

For example, if the first event set area 301 and the second event set area 303 are set to overlap a "lane-1" section which is a specific lane and the first fusion sensor 120-1 is set to detect and count the driving of a "bus" and a "large truck" in the first event set area 301 and set to detect and count the driving of a "car", a "small truck" and a "motorcycle" in the second event set area 303, the first fusion sensor 120-1 may detect, as a traffic volume of large vehicles, event information from the first event set area 301 and detect, as a traffic volume of small vehicles, event information from the second event set area 303 according to classification of traffic objects driving in the "lane-1" section.

The traffic volume of large vehicles detected in the first event set area 301 and the traffic volume of small vehicles detected in the second event set area 303 may be used to calculate the traffic ratio statistics between the large vehicles and the small vehicles in the "lane-1" section. In this case, a proactive maintenance cycle of the road may be set to be shorter in case of frequent traffic of the large vehicles than in case of frequent traffic of the small vehicles, and, thus, the management of the road can be optimized.

For another example, if the first event set area 301 and the second event set area 303 are set to overlap the "lane-1" section which is a specific lane and the first fusion sensor 120-1 is set to detect any violation of a predetermined speed limit in the first event set area 301 and detect a "large truck" in the second event set area 303, the first fusion sensor 120-1 may further generate event information indicative of a speed violation of the "large truck" in an event overlap set area 307.

For yet another example, the first event set area 301 and the second event set area 303 are set to overlap the "lane-1" section which is a specific lane and the first fusion sensor 120-1 is set to detect the presence or absence of any stationary vehicle in the first event set area 301 and detect a "bus" in the second event set area 303, the first fusion sensor 120-1 may generate separate bus stop event information by specifying only a case where the "bust" stops in the event overlap set area 307.

As described above, according to the present disclosure, it is possible to generate the type of event information previously set for use as well as other types of event information which can be set for a multi-event overlap detection. Thus, the operator may design and manage various cases which can be combined according to the purpose and intention of the operator.

Referring back to **FIG. 2****,** the traffic information generating unit 210 may generate traffic information about a target road based on detection information collected from at least one fusion sensor installed in the target road. Herein, the traffic information may include at least one of traffic information for each time point, traffic information for each lane, traffic information for each type of traffic object, and traffic information for each traffic event. Herein, the traffic event may include, for example, a lane change event, a queue length excess event, a speed violation event, etc.

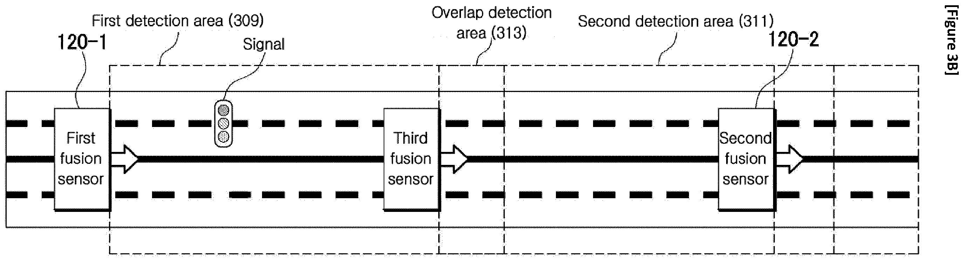

Meanwhile, in order to measure a traffic volume in an area beyond a detection area of a unit fusion sensor, an overlap detection area 313 where a first detection area 309 of the first fusion sensor 120-1 and a second detection area 311 of a second fusion sensor 120-2 are overlapped may be set as shown in **FIG. 3B****.** Also, in order to readily monitor traffic situations occurring in the area beyond the detection area of the unit fusion sensor, a third fusion sensor 120-3 may be installed at a point where the overlap detection area 313 is minimized.

In this case, if a traffic object located in the overlap detection area 313 is redundantly detected by the fusion sensors 120-1 and 120-2, the traffic information generating unit 210 may analyze similarity between information about the traffic object collected from the first fusion sensor 120-1 and the second fusion sensor 120-2 respectively.

The traffic information generating unit 210 may analyze similarity between the traffic object detected by the first fusion sensor 120-1 and the traffic object detected by the second fusion sensor 120-2 in terms of the location, speed and type of the traffic object and convert the detection information collected from the fusion sensors 120-1 and 120-2 in order to avoid false detection caused by overlap detection of the traffic object in the overlap detection area 313.

When a shadow section occurs near respective points where the first fusion sensor 120-1 and the second fusion sensor 120-2 installed in the target road are located, the traffic information generating unit 210 may track a movement of the traffic object based on distance information of the shadow section and similarity between information about the traffic object entering into and exiting from the shadow section.

The traffic information generating unit 210 may track a movement of the traffic object by analyzing distance information between each fusion sensor 120-1 and 120-2 and the shadow section, and similarity between the location, speed and type of the traffic object entering into and exiting from the shadow section.

In an environment where a plurality of fusion sensors is installed as shown in **FIG. 3B**, if there is no pedestrian at the crosswalk and the average speed of driving traffic objects driving is remarkably lower than a speed limit for the road, an optimal signaling system can be constructed by changing a traffic signal cycle of the road.

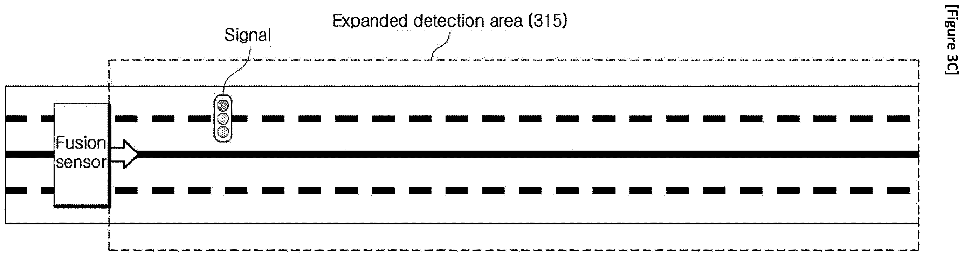

Referring to **FIG. 3B** and **FIG. 3C****,** if a plurality of fusion sensors is installed to form a the overlap detection area 313, an expanded detection area 315 which can be expanded depending on the number of fusion sensors installed by the operator regardless of a detection range limit of a unit fusion sensor may be formed.

The traffic information generating unit 210 may further generate traffic information about the expanded detection area 315 including the detection areas of each fusion sensor. Herein, the traffic information may include at least one of traffic information for each time point, traffic information for each lane, traffic information for each type of traffic object, and traffic information for each traffic event.

In the expanded detection area 315, the traffic information generating unit 210 may track vehicle object information ID detected in each detection area regardless of the detection range limit of the unit fusion sensor and also classify the vehicle object information ID for each lane or type of traffic object. If a city infrastructure including the expanded detection area 315 is constructed, the traffic information generating unit 210 may track entry and exit points of a traffic object entering a main road, the type of the traffic object, and entry and exit information and the collecting unit 200 may collect a speed at a specific point in the entire driving path and detailed information of a driving lane.

The traffic information generating unit 210 may rearrange traffic information about the expanded detection area 315 based on GPS location or time information.

The traffic information generating unit 210 may store, in a local database, detection information about a detection area of each fusion sensor, traffic information about a target road including the detection area, and traffic information about an expanded detection area.

The traffic information generating unit 210 may further generate traffic statistics information depending on a user statistics set range by using the information stored in the local database. Herein, the user statistics set range may include, for example, a specific time point range, a section range, a traffic event range, a traffic object type range, etc.

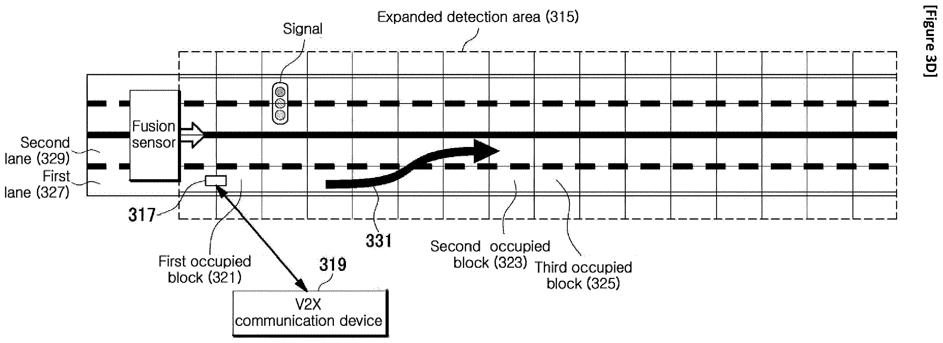

The expanded detection area 315 may be separated into predetermined size blocks as shown in **FIG. 3D**. In the expanded detection area 315, occupied blocks separated on respective lanes may be formed. Each occupied block can be expanded to the entire area on a city/nation scale, and the number and types of traffic objects in each occupied block, the presence or absence of vehicle stop, speeds, block occupation rates, and traffic volume information of traffic objects entering into and exiting from the blocks may be generated.

The information generated in each occupied block may be classified based on occupied block identification information. Therefore, when a traffic object 317 driving on the road can communicate with a V2X communication device 319, traffic flow information about the entire city area may be provided to the traffic object 317.

For example, when the traffic object 317 of a specific vehicle type located in a first occupied block 321 can perform radio communication typically defined as V2X communication in autonomous driving technologies, the traffic object 317 may transmit destination information and GPS information (or location information generated by other self-location production systems) to the center server 100 by using V2X communication to acquire an optimal driving path or state information of the preceding road.

The center server 100 may use current location information and destination information of the traffic object 317 to generate expected path information, and determine whether an expected path generated based on traffic situation information detected from an area to which the traffic object 317 is heading is appropriate, based on the expected path information. Also, the center server 100 may transmit recommended driving lane information 331 derived based on the traffic situation information to the traffic object 317.

If the traffic object 317 is located in the expanded detection area 315 while driving in a first lane 327 and there is a traffic congestion-causing situation (*e.g.*, occurrence of accident, continuous bus stop at a bus station, etc.) in a second occupied block 323 or a third occupied block 325, which is preceding traffic information based on the traffic object 317, the center server 100 may detect information for determining a traffic congestion indicator, such as the number and average speed of vehicles in the second occupied block 323 or the third occupied block 325, generate the recommended driving lane information 331 recommending a second lane 329 as an optimal driving lane when it is determined that traffic congestion occurs, and transmit the recommended driving lane information 331 to the traffic object 317 by using V2X communication.

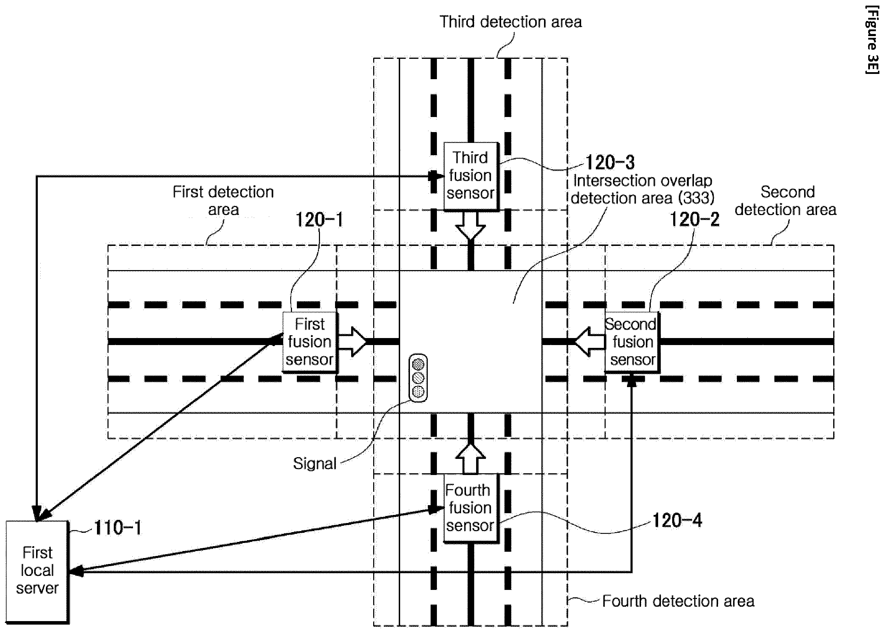

Referring to **FIG. 3E****,** if a plurality of fusion sensors 120-1, 120-2, 120-3 and 120-4 is installed at an intersection, the plurality of fusion sensors 120-1, 120-2, 120-3 and 120-4 may generate detection information including information about traffic objects entering into and exiting from an intersection overlap detection area 333 formed by first to fourth detection areas detected by the plurality of fusion sensors 120-1, 120-2, 120-3 and 120-4, respectively.

For example, the plurality of fusion sensors 120-1, 120-2, 120-3 and 120-4 may detect the number of a lane in which a traffic object entering into and exiting from the intersection overlap detection area 333 drives, the speed of the traffic object, the type of the traffic object, a moving path of the traffic object in the intersection overlap detection area 333, the number of vehicles in the intersection overlap detection area 333, the average driving speed, driving direction changes of the traffic object (going straight/ turning left/ turning right/ turning around), and a movement of the traffic object, such as a traffic event, in the intersection overlap detection area 333.

The detection information detected by the plurality of fusion sensors 120-1, 120-2, 120-3 and 120-4 may be stored in a local database of the first local server 110-1.

The traffic information generating unit 210 may rearrange or reproduce information for each traffic object, each lane, each driving direction (going straight/ turning left/ turning right/ turning around) and each event at a specific time point and cycle during a specific period by using the information stored in the local database.

The transmitting unit 220 may transmit traffic information about a target road to the center server 100 interworking with a plurality of local servers.

Meanwhile, a conventional signaling system at an intersection generates traffic signals (*e.g*., green/ red/ left/ right, etc.) with respect to traffic axes for respective directions according to a predetermined signal cycle. In general, the traffic signals are allowed only for a limited traffic axis among a plurality of traffic axes. However, if the signal cycle cannot reflect actual traffic situations in real time, traffic congestion is worsened.

To solve this problem, the traffic information generating unit 210 may analyze at least one of a degree of congestion for the intersection overlap detection area 333 and a degree of congestion for the traffic axes for respective directions at the intersection based on the detection information collected from the plurality of fusion sensors 120-1, 120-2, 120-3 and 120-4.

The traffic information generating unit 210 may determine whether a signal change cycle for the intersection is appropriate based on the analyzed degrees of congestion.

The transmitting unit 220 may transmit the result of appropriability of the signal change cycle for the intersection to the center server 100.

For example, if passage allowing and prohibiting signals, such as going straight, turning around, turning left, turning right, etc., are operated for each traffic axis according to a traffic signaling schedule set by the traffic operator. The traffic information generating unit 210 may analyze and generate a degree of congestion for the intersection overlap detection area 333 according to a cycle in the traffic signaling schedule based on detection information including a vehicle driving speed in the intersection overlap detection area 333, a road occupation rate depending on the size of a traffic object, and entry and exit traffic volumes for the intersection overlap detection area 333 according to a signaling system.

Also, the traffic information generating unit 210 may measure traffic volumes for respective directions (north/south/east/west/northeast/northwest/southeast/southwest) in the intersection overlap detection area 333 based on departure and arrival traffic volumes in each lane with respect to the intersection overlap detection area 333 and a contact line between lanes constituting each traffic axis. Therefore, the traffic information generating unit 210 may analyze and generate the volumes of traffic going straight, turning around, turning left and turning right for each traffic axis in the intersection overlap detection area 333.

Further, the traffic information generating unit 210 may determine whether the signal change cycle for the intersection is appropriate by comparing a degree of congestion for the intersection overlap detection area 333 and the departure and arrival traffic volumes for each traffic axis in the intersection overlap detection area 333 with the traffic signaling schedule information.

Furthermore, when a degree of congestion for each signal cycle in the intersection overlap detection area 333 is uniform, the traffic information generating unit 210 may determine that optimal signaling system state information, which is information for determining the reasonability of the signaling system, is "good".

If a deviation of the degrees of congestion in the intersection overlap detection area 333 for each signal cycle is higher than a predetermined threshold or is not uniform as a result of statistically analyzing the accumulated degrees of congestion in the intersection overlap detection area 333 for each signal cycle, the traffic information generating unit 210 may determine that the optimal signaling system state information is "bad".

Alternatively, the traffic information generating unit 210 may generate relative state information of the intersection signaling system with no deviation and the greatest deviation as a maximum value and a minimum value.

If the optimal signaling system state information is "bad", the traffic information generating unit 210 may check whether a specific signal cycle, which causes the state information to be "bad", is greater or less than a passage allowing time and may calculate an alternative passage allowing time.

The transmitting unit 220 may transmit alternative signal cycle information of the calculated passage allowing time to the center server 100. The center server 100 may display signals based on the received alternative signal cycle information and thus may operate the optimal signaling system.

According to the present disclosure, the optimal traffic signaling system is provided as an alternative based on the result of appropriability of the signal change cycle for the intersection. Thus, it is possible to suppress worsening of traffic congestion at the intersection in real time and also possible to optimize the traffic flow in a broad area.

Also, according to the present disclosure, it is possible to provide a preventive signaling system for previously detecting and suppressing events, such as jaywalking, illegal lane change, speed violation, etc., which may cause accidents at the intersection with a high probability of occurrence of traffic accidents.

Meanwhile, it would be understood by a person with ordinary skill in the art that each of the collecting unit 200, the traffic information generating unit 210, and the transmitting unit 220 can be implemented separately or in combination with one another.

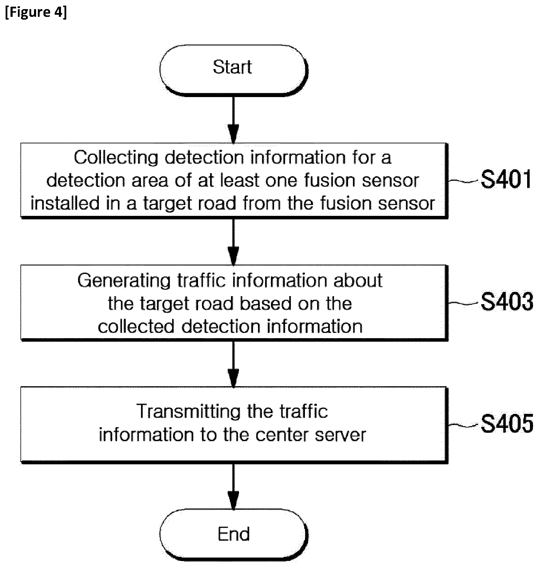

**FIG. 4** is a flowchart showing a method for controlling road traffic according to an embodiment of the present disclosure.

Referring to **FIG. 4****,** in a step S401, the first local server 110-1 may collect detection information for a detection area of at least one fusion sensor installed in a target road. Herein, an event set area for detecting at least one lane in the target road is set within the detection area.

In a step S403, the first local server 110-1 may generate traffic information about the target road based on the collected detection information.

In a step S405, the first local server 110-1 may transmit the traffic information to the center server 100 interworking with a plurality of local servers.

In the descriptions above, the steps S401 to S405 may be divided into additional steps or combined into fewer steps depending on an embodiment. In addition, some of the steps may be omitted and the sequence of the steps may be changed if necessary.

The embodiment of the present disclosure can be embodied in a storage medium including instruction codes executable by a computer such as a program module executed by the computer. A computer-readable medium can be any usable medium which can be accessed by the computer and includes all volatile/non-volatile and removable/non-removable media. Further, the computer-readable medium may include all computer storage media. The computer storage media include all volatile/non-volatile and removable/non-removable media embodied by a certain method or technology for storing information such as computer-readable instruction code, a data structure, a program module or other data.

The above description of the present disclosure is provided for the purpose of illustration, and it would be understood by a person with ordinary skill in the art to which the present invention belongs that various changes and modifications may be made without changing technical conception and essential features of the present disclosure. Thus, it is clear that the above-described examples are illustrative in all aspects and do not limit the present disclosure. For example, each component described to be of a single type can be implemented in a distributed manner, likewise, components described to be distributed can be implemented in a combined manner.

The scope of the present disclosure is defined by the following claims rather than by the detailed description of the embodiment, and it should be understood that all modifications and embodiments conceived from the meaning and scope of the claims and their equivalents are included in the scope of the present disclosure.

## Claims

1. A local server for controlling road traffic, comprising:
a collecting unit configured to collect detection information for a detection area of at least one fusion sensor installed in a target road from the fusion sensor; and
a traffic information generating unit configured to generate traffic information about the target road based on the collected detection information,
wherein an event set area for detecting at least one lane in the target road is set within the detection area.

2. The local server of Claim 1,
wherein the fusion sensor includes a camera sensor and a radar sensor.

3. The local server of Claim 1,
wherein the detection information includes at least one of location information and type information of a traffic object located in the detection area, the total number of traffic objects driving in the detection area, a driving speed of each traffic object, an average driving speed in each lane of the detection area, and the number of lane changes.

4. The local server of Claim 1,
wherein the traffic information generating unit is further configured to generate traffic information about an expanded detection area including the detection areas of each fusion sensor, and
the traffic information includes at least one of traffic information for each time point, traffic information for each lane, traffic information for each type of traffic object, and traffic information for each traffic event.

5. The local server of Claim 1,
wherein the event set area is an area for detecting an occurrence of a predetermined event in the lane, and
the predetermined event includes at least one of a speed violation event, a lane change event, a dedicated lane violation event, and a backward driving event.

6. The local server of Claim 1,
wherein when a first fusion sensor and a second fusion sensor are installed in the target road and a traffic object is located in an overlap detection area where a first detection area of the first fusion sensor and a second detection area of the second fusion sensor are overlapped,
the traffic information generating unit is configured to analyze similarity between information about the traffic object collected from the first fusion sensor and the second fusion sensor.

7. The local server of Claim 1,
wherein when a shadow section occurs near respective points where a first fusion sensor and a second fusion sensor installed in the target road are located,
the traffic information generating unit is configured to track a movement of a traffic object based on distance information of the shadow section and similarity between information about the traffic object entering into and exiting from the shadow section.

8. The local server of Claim 1,
wherein when a plurality of fusion sensors is installed at an intersection, the plurality of fusion sensors generates detection information including information about traffic objects entering into and exiting from an intersection overlap detection area formed by detection areas detected by the plurality of fusion sensors.

9. The local server of Claim 8,
wherein the traffic information generating unit is configured to analyze at least one of a degree of congestion for the intersection overlap detection area and a degree of congestion for traffic axes for respective directions at the intersection based on the detection information collected from the plurality of fusion sensors.

10. The local server of Claim 9,
wherein the traffic information generating unit is configured to determine whether a signal change cycle for the intersection is appropriate based on the analyzed degrees of congestion.

11. The local server of Claim 1, further comprising:
a transmitting unit configured to transmit the traffic information to a center server interworking with a plurality of local servers.

12. A method for controlling road traffic by a local server, comprising:
collecting detection information for a detection area of at least one fusion sensor installed in a target road from the fusion sensor; and
generating traffic information about the target road based on the collected detection information,
wherein an event set area for detecting at least one lane in the target road is set within the detection area.

13. The method for controlling road traffic of Claim 12,
wherein the fusion sensor includes a camera sensor and a radar sensor.

14. The method for controlling road traffic of Claim 12,
wherein the detection information includes at least one of location information and type information of a traffic object located in the detection area, the total number of traffic objects driving in the detection area, a driving speed of each traffic object, an average driving speed in each lane of the detection area, and the number of lane changes.

15. The method for controlling road traffic of Claim 12,
wherein the generating traffic information about the target road includes:
further generating traffic information about an expanded detection area including the detection areas of each fusion sensor, and
the traffic information includes at least one of traffic information for each time point, traffic information for each lane, traffic information for each type of traffic object, and traffic information for each traffic event.

16. The method for controlling road traffic of Claim 12,
wherein the generating traffic information about the target road includes:
if a first fusion sensor and a second fusion sensor are installed in the target road and a traffic object is located in an overlap detection area where a first detection area of the first fusion sensor and a second detection area of the second fusion sensor are overlapped,
analyzing similarity between information about the traffic object collected from the first fusion sensor and the second fusion sensor.

17. The method for controlling road traffic of Claim 12,
wherein the generating traffic information about the target road includes:
if there are shadow sections near respective points where a first fusion sensor and a second fusion sensor installed in the target road are located,
tracking a movement of the traffic object based on distance information of the shadow sections and similarity between information about the traffic object entering into and exiting from the shadow sections.

18. The method for controlling road traffic of Claim 12,
wherein when a plurality of fusion sensors is installed at an intersection, the plurality of fusion sensors generates detection information including information about traffic objects entering into and exiting from an intersection overlap detection area formed by detection areas detected by the plurality of fusion sensors.

19. The method for controlling road traffic of Claim 18, further comprising:
analyzing at least one of a degree of congestion for the intersection overlap detection area and a degree of congestion for traffic axes for respective directions at the intersection based on the detection information collected from the plurality of fusion sensors.

20. The method for controlling road traffic of Claim 19, further comprising:
determining whether a signal change cycle for the intersection is appropriate based on the analyzed degrees of congestion.

21. The method for controlling road traffic of Claim 12, further comprising:
transmitting the traffic information to a center server interworking with a plurality of local servers.
